Europäisches Patentamt

European Patent Office

Office européen des brevets

Veröffentlichungsnummer: **0 286 986**

**A1**

# EUROPÄISCHE PATENTANMELDUNG

Anmeldenummer: 88105598.2

Int. Cl.⁴ **B65G 1/133 , B65G 1/127**

Anmeldetag: 08.04.88

Priorität: 14.04.87 CH 1450/87

Veröffentlichungstag der Anmeldung:
**19.10.88 Patentblatt 88/42**

Benannte Vertragsstaaten:
**AT BE CH DE ES FR GB IT LI NL SE**

Anmelder: **SYSTEM SCHULTHEIS AG**
**Brauereiweg 23C**
**CH-8640 Rapperswil SG(CH)**

Erfinder: **Greub, Bruno A.**
**In der Rüti**
**CH-Uerikon(CH)**

Vertreter: **Scheidegger, Zwicky, Werner & Co.**
**Stampfenbachstrasse 48 Postfach**
**CH-8023 Zürich(CH)**

Lageranlage.

Die Anlage besteht aus einer Umlaufregalanlage, aufgeteilt in eine Mehrzahl individueller Paternostereinheiten (P₁-P₄), mit Umlenkstellen in einer gemeinsamen Ebene. Vor dieser Ebene (E) ist ein Regalbedienungsgerät (3) angeordnet, welches jede Stelle der in dieser Ebene ankommenden Regale (R) der individuellen Paternostereinheiten (P₁-P₄) erreicht.

Dank der Kombination von Umlaufregalen und Regalbedienungsgerät kann bei einer die zur Verfügung stehenden Platzverhältnisse bestens ausnützenden Anlage die Zugriffzeit wesentlich optimiert werden.

Fig. 1

EP 0 286 986 A1

# Lageranlage

Die vorliegende Erfindung betrifft eine Lageranlage mit in einer Mehrzahl von Etagen übereinander angeordneten Umlaufregaleinheiten. von deren jeweils zwei Bahnumlenkstellen die eine mit ihrer Umlaufachse bei allen Umlaufregaleinheiten in einer gemeinsamen Ebene liegt, vor der ein in einer parallelen Ebene verfahrbares Regalbedienungsgerät mit Mitteln für das an der Bahnumlenkstelle jeweils einer der Umlaufregaleinheiten erfolgende Be- und Entladen angeordnet ist.

Bei einer aus der FR-PS 2 533 198 bekannten Lageranlage dieser Art handelt es sich um ein Hochregallager mit für die Aufnahme des Lagergutes dienenden Kästen, die jeweils an einen in einer horizontalen Ebene sich bewegenden Umlaufförderer angehängt werden. so dass sie auslegerartig gehalten und deshalb mittels Rollen und Führungsschienen über die ganze Länge des Umlauf-Förderweges abgestützt sind. Damit bei der freitragenden Anordnung der Kästen die Abstützkräfte nicht zu gross werden, muss jeder Umlaufförderer aus zwei im Abstand übereinander angeordneten Endlosketten bestehen, was bei der in der Lageranlage vorhandenen grossen Anzahl von Umlaufförderern in Etagen übereinander und nebeneinander ziemlich aufwendig ist. Die Umlenkachsen der Umlaufförderer stehen senkrecht, und die in Etagen übereinander angeordneten Umlaufförderer lassen sich daher durch einen gemeinsamen Antrieb und eine durchgehende Achse antreiben, damit jedoch die Umlaufförderer etagenweise individuell in Betrieb gesetzt werden können, müssen bei jeder Etage Kupplungen zwischen einer durchgehenden Achse und Einzelantrieben für jede Kette vorgesehen sein, was wiederum sehr aufwendig ist. Da der Zweck dieser Hochregallagerkonstruktion jedoch darin besteht, für den Zugriff zu einer Etage nicht sämtliche Umlaufförderer in den anderen Etagen auch zu bewegen, muss eine solche Lösung des Antriebs gewählt werden.

Mit dem vorbekannten Hochregallager ist es ferner nur möglich. Gegenstände zu lagern. die nicht grösser als die Abmessungen der Kasten sind. die Konstruktion der gesamten Anlage erlaubt es jedoch nicht, beispielsweise langes Stangenmaterial zu lagern. weil zwischen den auf der gleichen Etage nebeneinander vorhandenen Umlaufförderern gerade nur der notwendige Spielraum vorhanden ist. damit die Kasten sich aneinander vorbeibewegen können.

Der vorliegenden Erfindung liegt die Aufgabe zugrunde. eine Lageranlage zu schaffen. mit der insbesondere auch lange Gegenstände wie beispielsweise Stangenmaterial. Profileisen etc. in einer Anlage dieser Art gelagert werden können. Dazu muss dieses zweckmässig parallel zur Beschickungsfrontseite der Lageranlage in dieses eingebracht werden können. Dies bedingt eine grundsätzlich andere Konstruktion und ein anderes Bewegungsprinzip der Benältnisse. in die das zu lagernde Material hineinzulegen ist. Ferner bestand die Aufgabe darin. eine insbesondere an den Umlenkstellen in der Konstruktion weniger aufwendige Lageranlage ohne freitragend abgestützte und einzuhängende Behältnisse zu schaffen, welche Lageranlage bezüglich der Belastung bei weniger Konstruktionsaufwand stabil sein soll.

Zur Lösung dieser Aufgabe weist die Lageranlage die Merkmale gemäss Anspruch 1 auf. Der Vorteil der horizontal angeordneten Umlenkachsen des Umlaufförderers besteht darin, dass sich die an diesem angeordneten Behältnisse für die Aufnahme des Lagergutes an der Umlenkstelle vertikal bewegen und dabei mit der Breitseite des Behältnisses parallel zu der Frontseite der Lageranlage, vor welcher das Regalbedienungsgerät in einer Vertikalebene verfahrbar ist. so dass man hinsichtlich der Breite der zu verwendenden Behältnisse, Gondeln oder Plattformen für die Aufnahme des Lagergutes nicht beschränkt ist. Mit einem in einer vertikalen Ebene längs einer oberen und unteren Bahn sich bewegenden Umlaufförderer lässt sich die Last einfacher ausbalanciert abstützen. An der am bedienungsseitigen Kopfende befindlichen Umlenkstelle ist auf jeder der Etagen eine horizontale Umlenkachse vorhanden. die daher leicht individuell angetrieben werden können.

In zweckmässiger Ausgestaltung ist das Regalbedienungsgerät. das gleichzeitig vertikal und horizontal bewegbar ist, als Vertikalelevator mit seitlich teleskopartig ausfahrbarem Aufnahmetisch ausgebildet. Zweckmässig können vor der Bewegungsebene des Regalbedienungsgerätes auf der dem Umlaufregaleinheiten gegenüberliegenden Seite eine Auslagerstation und eine Einlagerstation vorgesehen sein. die auf beliebig wählbarer Höhe über dem Boden angeordnet sein können, weil das an diesen Stationen zu übergebende Lagergut von dem in einem unbehinderten Raum verfahrbaren Regalbedienungsgerät auch abwärts bis zu einer untersten Etage der Lageranlage gebracht werden kann.

Die Erfindung wird nachstehend anhand eines in der Zeichnung dargestellten Ausführungsbeispiels näher erläutert. Es zeigen:

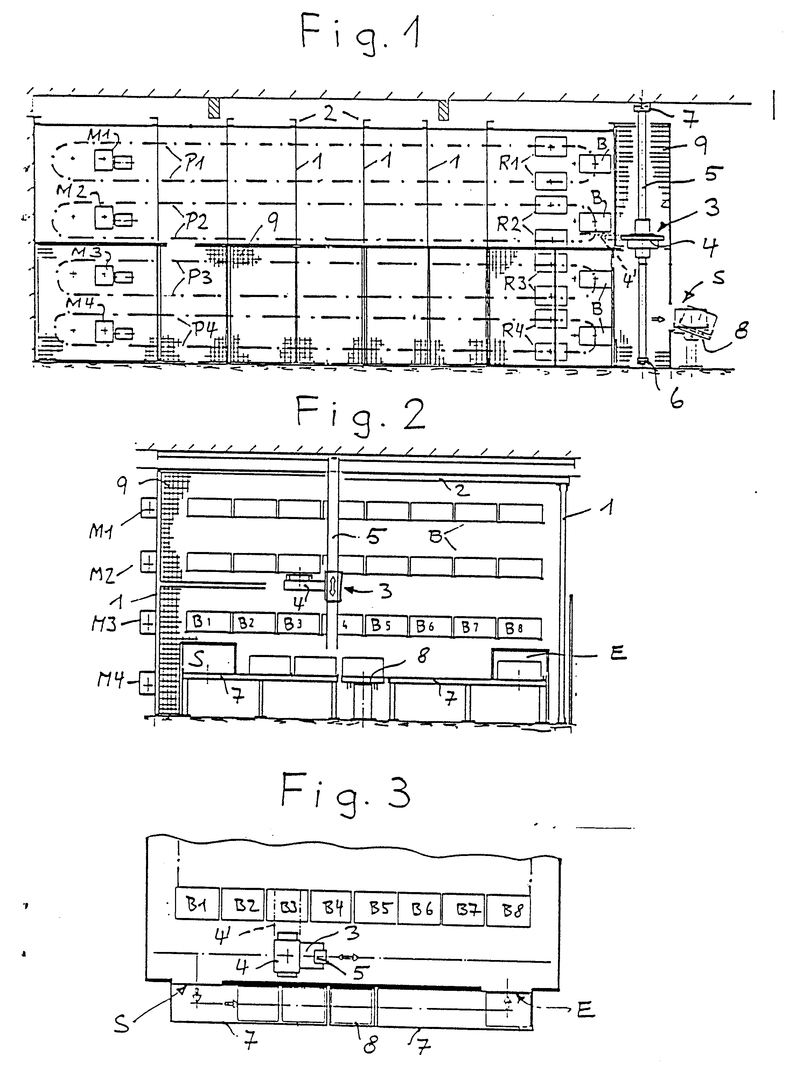

Fig. 1 einen Seitenriss. rein schematisch, einer Lageranlage nach der Erfindung;

Fig. 2 eine Stirnansicht der Anlage nach Fig. 1. und

Fig. 3 eine Draufsicht auf das Stirnende der Anlage nach Fig. 1.

Die Zeichnung zeigt eine Lageranlage, bei welcher in einem Gerüst von Stahlträgern 1,2 vier individuelle Horizontal-Paternoster $P_1$, $P_2$, $P_3$ und $P_4$ untergebracht sind. Jeder der Paternoster weist zwei horizontal verlaufende Bahnen auf, entlang welcher mittels einer geschlossenen Lastkette eine Anzahl Regale (hier z.B. in Form von Gondeln) $R_1$, $R_2$, $R_3$, $R_4$ verschoben werden können. Beim gezeigten Beispiel können bei jedem Paternoster ca. 20 Regale vorgesehen sein. Auf jedem Regal können nebeneinander eine Anzahl Behälter (oder Paletten) $B_1$-$B_8$ in vorbestimmten, d.h. ansteuerbaren Sektoren für die Aufnahme der zu lagernden Güter wegnehmbar bzw. gegebenenfalls austauschbar angeordnet sein.

Jeder der Paternoster $P_1$-$P_4$ ist durch je einen Antriebsmotor $M_1$-$M_4$, gegebenenfalls mit zugehörigem Getriebe, individuell antreibbar. Am einen Kopfende der Lageranordnung liegen die Umlenkstellen der verschiedenen Paternoster $P_1$-$P_4$ alle etwa in einer gemeinsamen vertikalen Ebene, in welche sich jedes Regal steuern lässt, um dort entladen oder beladen zu werden.

An diesem Kopfende ist nun ein Regalbedienungsgerät 3 in Form eines vertikalen Elevators vorgesehen. Das Gerät 3 weist einen Tisch 4 auf, welcher mit seitlich teleskopisch ausfahrbaren Verlängerungen 4' versehen ist, welche eine Palette oder einen Behälter B aus dem Regal entnehmen oder in dieses abstellen können.

Der Tisch 4 ist entlang einer vertikalen Führung 5 motorisch verschiebbar. Das ganze Gerät 3, bestehend aus Tisch 4, Motoren, vertikaler Führung 5 etc. ist in Schienen 6,7 horizontal verfahrbar. Dank dieser Anordnung kann der Tisch 4 des Regalbedienungsgerätes 3 an jede gewünschte Stelle vor den Regalen der Paternoster $P_1$-$P_4$ am genannten Kopfende der Lageranlage gebracht werden (üblicherweise mittels vollelektronischer, computergesteuerter Einrichtungen). Eine entsprechende Steuerung bringt auch das gewünschte Regal, das sich in einem beliebigen der Paternoster $P_1$-$P_4$ befindet, an das Kopfende.

Ein vom Gerät 3 aufgenommenes Lagergut (Behälter B) wird dann zu einer zentralen Auslagerstation S gefahren, wo das Gut auf einen Auslagertisch 7 gelangt. In diesem Tisch kann sich z.B. eine Kippstation 8 befinden, um einen das Lagergut enthaltenden Behälter besser ein-oder ausladen zu können.

Am selben Kopfende der Lageranlage befindet sich üblicherweise auch eine Einlagerstation E, über welche mittels des Gerätes 3 Lagergut (Behälter, Paletten) in das nächstverfügbare Regal gebracht wird. Der Einlagerplatz wird selbstverständlich im Computer gespeichert, um für einen Abruf bereit zu sein.

Die Lageranlage ist normalerweise wenigstens teilweise durch ein Gitter 9 geschützt, um Unfälle durch eventuell herabstürzende Güter zu vermeiden.

Dank der gezeigten Anlage, bei welcher selbstverständlich auch andere Konfigurationen der individuellen Paternoster denkbar sind, kann der Vorteil der den zur Verfügung stehenden Raum voll ausnützenden Paternostertechnik genutzt werden, ohne die Nachteile einer möglicherweise allzulangen Zugriffzeit in Kauf nehmen zu müssen. Der Platzbedarf für das zusätzliche Regalbedienungsgerät ist minim.

## Ansprüche

1. Lageranlage mit in einer Mehrzahl von Etagen übereinander angeordneten Umlaufregaleinheiten, von deren jeweils zwei Bahnumlenkstellen die eine mit ihrer Umlenkachse bei allen Umlaufregaleinheiten in einer gemeinsamen Ebene liegt, vor der ein in einer parallelen Ebene verfahrbahres Regalbedienungsgerät mit Mitteln zum Be-und Entladen an der Bahnumlenkstelle jeweils einer der Umlaufregaleinheiten angeordnet ist, dadurch gekennzeichnet, dass die Umlaufregaleinheiten jeweils einen längs zwei vertikal übereinander liegender Bahnen geführten Endlos-Umlaufförderer ($P_1$-$P_4$) mit horizontalen Umlenkachsen aufweisen, die auf jeder Etage individuell antreibbar sind.

2. Lageranlage nach Anspruch 1, dadurch gekennzeichnet, dass das vertikal und horizontal verfahrbare Regalbedienungsgerät (3) zum Ansteuern vorbestimmter Regalstellen gleichzeitig in beiden Bewegungsrichtungen bewegbar ist.

3. Lageranlage nach Anspruch 2, dadurch gekennzeichnet, dass das Regalbedienungsgerät als Vertikalelevator (3) mit seitlich verfahrbarem Aufnahmetisch (4,4') ausgebildet ist.

4. Lageranlage nach Anspruch 3, dadurch gekennzeichnet, dass der Aufnahmetisch (4,4') teleskopisch aus-und einfahrbar ist.

5. Lageranlage nach Anspruch 1, dadurch gekennzeichnet, dass vor der Bewegungsebene des Regalbedienungsgerätes (3) auf der den Umlaufregaleinheiten gegenüberliegenden Seite eine Auslagerstation (S) und eine Einlagerstation (E) vorgesehen sind, die beide vom Regalbedienungsgerät (3) bedienbar sind.

6. Lageranlage nach Anspruch 5, dadurch gekennzeichnet, dass die Aus-und die Einlagerstation auf einer beliebig wählbaren Höhe inbezug auf das vertikal verfahrbare Regalbedienungsgerät vorgesehen sind.

7. Lageranlage nach Anspruch 1. dadurch gekennzeichnet. dass in einer Mehrzahl von Etagen übereinander angeordnete Umlaufregaleinheiten nebeneinandergestellt in einer Mehrzahl vorhanden und mittels eines gemeinsamen Regalbedienungsgerätes (3) bedienbar sind.

# Fig. 1

# Fig. 2

# Fig. 3

# EUROPÄISCHER RECHERCHENBERICHT

EP 88 10 5598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C-3 234 817 (MANNESMANN) <br> * Insgesamt, insbesondere Anspruch 6, Zusammenfassung, Figuren 2,3 * & FR-A-2 533 198 (Kat. D) <br> --- | 1-7 | B 65 G 1/133 <br> B 65 G 1/127 |
| Y | DE-A-2 018 905 (BAYERISCHE PFLUGFABRIK) <br> * Das ganze Dokument * <br> ----- | 1-7 | |

**RECHERCHIERTE SACHGEBIETE (Int. Cl.4)**

B 65 G

Der vorliegende Recherchenbericht wurde für alle Patentansprüche erstellt

| Recherchenort | Abschlußdatum der Recherche | Prüfer |
|---|---|---|
| DEN HAAG | 30-06-1988 | WERNER D.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)